Europäisches Patentamt

European Patent Office

Office européen des brevets

(19)

(11)     EP 0 810 260 A1

(12)                 **EUROPÄISCHE PATENTANMELDUNG**

(43) Veröffentlichungstag:                                      (51) Int. Cl.⁶: **C08K 3/34**, C08J 5/18
     **03.12.1997 Patentblatt 1997/49**

(21) Anmeldenummer: 97107911.6

(22) Anmeldetag: **15.05.1997**

(84) Benannte Vertragsstaaten:
     **BE DE DK ES FI FR GB IT NL**

(30) Priorität: **28.05.1996 DE 19621309**

(71) Anmelder: **BAYER AG**
     **51368 Leverkusen (DE)**

(72) Erfinder:
     • **Gittinger, Andreas, Dr.**
       **47800 Krefeld (DE)**
     • **Joachim, Detlev, Dr.**
       **47800 Krefeld (DE)**
     • **Idel, Karsten-Josef, Dr.**
       **47802 Krefeld (DE)**
     • **Zaby, Gottfried, Dr.**
       **51375 Leverkusen (DE)**

(54)     **Folien oder Hohlkörper enthaltend eine Polyamidschicht**

(57)     Die Erfindung betrifft ein- oder mehrschichtige
Folien oder Hohlkörper, enthaltend mindestens eine
Polyamidschicht, welche nanodisperse Fluorglimmer
enthält, und hieraus hergestellte Verpackungen sowie
die Verwendungen von mit nanodispersen Fluorglimmer
gefülltes Polyamid zur Herstellung von ein- oder mehrschichtigen Folien oder Hohlkörpern.

EP 0 810 260 A1

**Beschreibung**

Die Erfindung betrifft ein- oder mehrschichtige Folien oder Hohlkörper, enthaltend mindestens eine Polyamidschicht, welche nanodisperse Fluorglimmer enthält, und hieraus hergestellte Verpackungen sowie die Verwendungen von mit nanodispersen Fluorglimmer gefülltes Polyamid zur Herstellung von Folien oder Hohlkörpern.

Folien und Hohlkörper, die eine Polyamidschicht enthalten, zeichnen sich durch eine Vielzahl vorteilhafter Eigenschaften aus. Zu nennen sind insbesondere gute optische Eigenschaften wie hohe Transparenz im Falle nicht eingefärbter Folien bzw. Hohlkörper und hoher Glanz. Außerdem von Bedeutung sind die guten mechanischen Eigenschaften wie hohe Zähigkeit, hohe Durchstoßfestigkeit, hohe Weiterreißfestigkeit und andere. Hinzu kommt natürlich eine einfache Herstellbarkeit und einfache Weiterverarbeitbarkeit.

Von besonderer Bedeutung für viele Einsatzgebiete für Folien und Hohlkörper, insbesondere für den Einsatz im Verpackungssektor ist eine niedrige Durchlässigkeit für Sauerstoff, Wasserdampf Kohlendioxid, Fette, Aromastoffe und andere wesentliche Komponenten des verpackten Gutes bzw. für Stoffe, die vom verpackten Gut ferngehalten werden sollen.

In vielen Fällen werden die formulierten Anforderungen an Folien oder Hohlkörper durch die Kombination verschiedener Materialien in einem mehrschichtigen Verbund realisiert. Die genannte niedrige Durchlässigkeit gegenüber Sauerstoff wird in einem solchen Verbund entweder von der Polyamidschicht beigesteuert, oder es werden zusätzlich Schichten sogenannter Hochbarrierematerialien wie z. B. Polyvinylidenchlorid oder Ethylen-Vinylalkohol-Copolymere (im allgemeinen unter der Kurzbezeichnung EVAL bekannt) eingesetzt.

Der Einsatz von Hochbarriereschichten hat vielfältige Nachteile. So ist der Halogenanteil im Polyvinylidenchlorid häufig unerwünscht. Außerdem sind die Hochbarrierematerialien vielfach teuer, schwer verfügbar und weisen Nachteile in der Verarbeitbarkeit wie z. B. geringe Temperaturbeständigkeit auf.

Beim Verzicht auf Hochbarriereschichten aufgrund ihrer aufgeführten Nachteile kann eine geringe Sauerstoffdurchlässigkeit einer Mehrschichtverbundfolie oder eines Mehrschichtverbundhohlkörpers in gewissem Ausmaß durch eine Polyamidschicht gewährleistet werden. Allerdings ist die Barrierewirkung von Polyamid gegenüber Sauerstoff häufig zu gering, falls es in einer Schichtdicke eingesetzt wird, wie sie zur Gewährleistung ausreichender mechanischer Eigenschaften einer Mehrschichtverbundfolie oder eines Mehrschichtverbundhohlkörpers erforderlich ist. Der Einsatz des Polyamides in höheren Schichtdicken, allein um eine ausreichende Sauerstoffbarriere zu erhalten, verbietet sich in der Regel aus Kostengründen.

EP-A 358 415 beschreibt Folien aus Polyamiden, die Schichtsilikate enthalten und die aufgrund des Schichtsilikates eine gesteigerte Sauerstoffbarriere besitzen. Der in EP-A 358415 in den Beispielen beschriebene Montmorillonit kann aber nur nach einem sehr aufwendigen Verfahren in das Polyamid eingearbeitet werden (Montmorillonit muß vorab mit einem Quellmittel wie z. B. einer Aminosäure umgesetzt werden, bevor er in das Polyamid eingearbeitet werden kann).

EP-A 605 005 beschreibt eine Masse aus Polyamid und Fluorglimmer. Folien aus dieser Formmasse werden nicht beschrieben. Die Herstellung von Folien aus Polyamiden, die einen mineralischen Füllstoff wie z. B. Fluorglimmer enthalten, ist nicht üblich, weil diese Folien im allgemeinen nicht transparent sind, einen geringen Glanz aufweisen sowie schlechte mechanische Eigenschaften, wie z. B eine geringe Zähigkeit, aufweisen.

Es bestand daher die Aufgabe, die beschriebene zu geringe Barrierewirkung des Polyamides gegenüber Sauerstoff durch eine geeignete Modifizierung des Polyamides zu erhöhen, ohne die anderen erwünschten Eigenschaften des Polyamides, insbesondere Transparenz, Glanz oder Zähigkeit, zu beeinträchtigen. Außerdem muß das modifizierte Polyamid auf einfache und kostengünstige Art und Weise herstellbar und verarbeitbar sein.

Überraschenderweise wurde nunmehr gefunden, daß Polyamide, denen Fluorglimmer als Additive zugesetzt werden, die formulierte Aufgabe erfüllen, wenn die Fluorglimmer-Partikel eine ausreichend kleine Partikelgröße aufweisen. Mit Fluorglimmer hinreichend kleiner Partikelgröße versehene Polyamide weisen eine verringerte Sauerstoffdurchlässigkeit auf, wobei die übrigen vorteilhaften Eigenschaften der Polyamide wie z. B. Transparenz, Glanz und Zähigkeit in ausreichendem Maße erhalten bleiben.

Gegenstand der Erfindung sind ein- oder mehrschichtige Folien oder Hohlkörper, enthaltend mindestens eine Polyamidschicht, wobei die Polyamidschicht feindispersen Fluorglimmer enthält.

Gegenstand der Erfindung ist ferner die Verwendung von mit nanodispersem Fluorglimmer gefülltes Polyamid zur Herstellung von ein- oder mehrschichtigen Folien oder Hohlkörpern.

Gegenstand der Erfindung sind außerdem Verpackungen aus einer erfindungsgemäßen Folie oder einem erfindungsgemäßen Hohlkörper.

Bei dem feindispersen Fluorglimmer in der Polyamidschicht handelt es sich um Fluorglimmer entsprechend der Formel (I)

$$x(MF) \cdot y(aMgF_2 \cdot bMgO) \cdot zSiO_2$$

wobei

M    für ein Alkalimetall steht und die Koeffizienten x, y, z, a und b die folgende Bedeutung haben:

$$0,1 \leq x \leq 2; 2 \leq y \leq 3,5; 3 \leq z \leq 4; 0 \leq a \leq 1; 0 \leq b \leq 1 \text{ und } a + b = 1.$$

Bevorzugt wird ein Fluorglimmer entsprechend o. g. Formel verwendet, bei dem M für Natrium, Lithium oder Kalium steht, wobei Kalium nicht allein, sondern nur anteilig zu maximal einem Drittel Gewichtsanteil neben Lithium oder Natrium eingesetzt wird.

Die mittlere Partikelgröße des in der Polyamidschicht enthaltenen Fluorglimmers beträgt weniger als 1 Mikrometer. Bevorzugt beträgt die mittlere Partikelgröße des Fluorglimmers weniger als 100 Nanometer. Besonders bevorzugt beträgt die mittlere Partikelgröße des Fluorglimmer weniger als 50 Nanometer. In der Regel haben die Teilchen eine Größe von mindestens 0,5 nm.

Die Bestimmung der mittleren Partikelgröße erfolgt durch visuelle Beurteilung transmissionselektronenmikroskopischer Aufnahmen von Ultradünnschnitten der entsprechenden Formmassen. Falls die Partikel stark anisotrop sind, ist unter der Partikelgröße die Abmessung der kleinsten auftretenden Achse zu verstehen (z. B. ist im Falle plättchenförmiger Partikel unter der Partikelgröße die Plättchendicke zu verstehen).

Die Fluorglimmer werden in einer Konzentration von 0,1 bis 10 Gewichtsprozent bezogen auf die Gesamtmasse der Polyamidschicht eingesetzt. Unter der Gesamtmasse der Polysmidschicht ist die Summe der Masse des in dieser Schicht enthaltenen Polyamides und der Masse des in dieser Schicht enthaltenen Fluorglimmers sowie gegebenenfalls der Masse weiterer in dieser Schicht enthaltener Zusatzstoffe zu verstehen. Bevorzugt wird der Fluorglimmer in einer Konzentration von 0,5 bis 5 Gewichtsprozent eingesetzt. Besonders bevorzugt wird der Fluorglimmer in einer Konzentration von 1 bis 3 Gewichtsprozent eingesetzt.

Bei dem Polyamid, das in der Polyamidschicht der erfindungsgemäßen Folien oder Hohlkörper enthalten ist, handelt es sich um ein bekanntes aliphatisches oder aromatisches oder teilaromatisches Homopolyamid oder Copolyamid oder um eine Mischung aus mehreren Polyamiden. Bevorzugt eingesetzt werden Polyamid 6 oder Polyamid 11 oder Polyamid 12 oder Polyamid 6,6 oder Polyamid 4,6 oder Polyamid 6,10 oder ein Copolyamid aus den Einheiten der genannten Homopolyamide oder ein Copolyamid aus Caprolactameinheiten und Einheiten abgeleitet von Hexamethylendiamin und Isophthalsäure oder ein Copolyamid aus Caprolactameinheiten und Einheiten abgeleitet von Isophorondiamin und Isophthalsäure. Besonders bevorzugt eingesetzt wird Polyamid 6 oder Polyamid 6,6 oder ein Copolyamid aus Caprolactameinheiten und Einheiten abgeleitet von Hexamethylendiamin und Adipinsäure.

Die Herstellung des in den erfindungsgemäßen Folien oder Hohlkörpern als Füllstoff eingesetzten Fluorglimmers kann z. B. nach der in US-P 5 204 078 beschriebenen Methode erfolgen. Der Anteil an Lithiumhexafluorosilikat oder Natriumhexafluorosilikat, das zusammen mit Talkum bei der Herstellung des Fluorglimmer eingesetzt wird, beträgt bevorzugt 10 bis 35 Gewichtsprozent bezogen auf die Mischung aus Lithiumhexafluorosilikat oder Natriumhexafluorosilikat und Talkum.

Die erfindungsgemäßen Folien oder Hohlkörper können weitere bekannte Hilfsmittel oder Zusatzstoffe in den jeweils üblichen Mengen enthalten. Diese weiteren Hilfsmittel oder Zusatzstoffe können in der Polyamidschicht enthalten sein, die die genannten Füllstoffe enthält, oder auch in den anderen Schichten der Folie.

Beispielhaft für weitere Hilfsmittel und Zusatzstoffe seien die folgenden genannt: Verarbeitungshilfsmittel wie z.B. Gleitmittel, Nukleierungsmittel, Stabilisatoren, Antiblockingmittel, weitere Füllstoffe, faserförmige oder teilchenförmige Verstärkungsstoffe wie z.B. Glasfasern, Glaskugeln oder mineralische Füllstoffe, Schlagzähmodifikatoren wie z.B. Kautschuke oder Polyolefine, Flammschutzmittel, Farbstoffe oder Pigmente.

Die erfindungsgemäßen Folien oder Hohlkörper können aus nur einer Polyamidschicht bestehen oder einen mehrschichtigen Aufbau aufweisen. Im Falle des mehrschichtigen Aufbaues können die weiteren Schichten z.B. aus Polyolefinen wie z.B. Polyethylen oder Polyethylencopolymeren wie z.B. Copolymeren aus Ethylen und Acrylsäure oder Methacrylsäure oder Barrierepolymeren wie z.B. Polyvinylidenchlorid oder Copolymeren aus Ethylen und Vinylalkohol (EVAL oder EVOH genannt) bestehen.

Die erfindungsgemäßen Folien oder Hohlkörper werden in bekannter Weise z.B. durch Extrusion, Coextrusion, Beschichten, Kaschieren oder Blasformen hergestellt. Im Falle der Folien kann die Extrusion oder Coextrusion z.B. nach dem sogenannten Chill-roll-Verfahren oder nach dem Blasextrusionsverfahren bzw. Blascoextrusionsverfahren erfolgen. Bei mehrschichtigen Folien oder Hohlkörpern können die handelsüblichen Haftvermittler eingesetzt werden.

Der Rohstoff für die Polyamidschichten der erfindungsgemäßen Folien oder Hohlkörper kann in einem kontinuierlichen oder in einem diskontinuierlichen Verfahren in bekannter Weise hergestellt werden. Bei einem diskontinuierlichen Verfahren kann es sich z.B. um die Polymerisation in einem Autokiaven handeln. Bei einem kontinuierlichen Verfahren kann es sich z.B. um die Polymerisation in einem sogenannten VK-Rohr handeln. Bevorzugt erfolgt die Herstellung nach einem kontinuierlichen Verfahren. Zur Erreichung hoher Molmassen, wie sie für die Anwendung als Folienmaterial häufig erforderlich sind, kann der Polymerisation in Schmelze eine Nachkondensation in fester Phase nachgeschaltet sein. Die Zugabe des Fluorglimmers kann vor, während oder nach der Polymerisation der Monomere zum Polyamid erfolgen. Erfolgt die Zugabe des Fluorglimmers nach der Polymerisation, so erfolgt sie vorzugsweise durch Zugabe zur Polyamidschmelze in einem Extruder. Erfolgt die Zugabe der erfindungsgemäßen Füllstoffe vor oder während der Polymerisation, so kann die Polymerisation eine zeitlich begrenzte Phase umfassen, während der in Gegenwart von 1 bis 50 Gewichtsprozent Wasser gearbeitet wird. Die Einpolymerisation in Gegenwart solch hoher Wassermengen ist das bevorzugte Herstellverfahren.

Die erfindungsgemäßen Folien oder Hohlkörper können vor ihrem letztendlichen Einsatzzweck weiter bearbeitet oder umgeformt werden. So können die erfindungsgemäßen Folien z. B. tiefgezogen werden.

Die erfindungsgemäßen Folien oder Hohlkörper zeichnen sich im Vergleich zu anderen Folien oder Hohlkörpern, die nicht die erfindungsgemäßen Füllstoffe enthalten, durch besonders niedrige Permeationswerte für Sauerstoff und andere Gase und Aromastoffe aus. Die übrigen polyamidspezifischen Eigenschaften wie Glanz, Transparenz und Zähigkeit sind nicht oder nur unwesentlich beeinträchtigt. Die Herstellung und Verarbeitung der erfindungsgemäßen Folien oder Hohlkörper kann auf einfache und kostengünstige Weise nach bekannten Verfahren erfolgen.

Die erfindungsgemäßen Folien oder Hohlkörper können z.B. zu Verpackungszwecken eingesetzt werden. Erfindungsgemäße Folien oder Hohlkörper können z.B. zur Verpackung von Lebensmitteln, wie Fleisch und Fleischprodukten, Wurst, Käse, Getränken u.a. verwendet werden. Die erfindungsgemäßen Folien oder Hohlkörper können z.B. auch zur Verpackung von Kosmetika wie z.B. Sonnenschutzcremes oder Chemikalien wie z.B. Pflanzenschutzmittel verwendet werden. Des weiteren können die erfindungsgemäßen Hohlkörper als Leitungen oder Tanks dienen. Dabei kann es sich z.B. um Leitungen oder Tanks für Kraftstoffe oder Öle für Automobile handeln.

**Beispiele**

**Herstellung des füllstoffhaltigen Polyamides, das zur Folienherstellung verwendet wird:**

In einem Autoklaven werden 7425 g Caprolactam, 1500 g Wasser und die im jeweiligen Beispiel angegebene Menge und Art Füllstoff unter Eigendruck 2 Stunden auf 240°C erhitzt. Anschließend wird das Wasser bei dieser Temperatur durch Druckverminderung bis auf Atmosphärendruck verdampft. Danach wird die erhaltene Masse 4 Stunden bei 270°C polymerisiert. Das so erhaltene Polyamid wird mit Wasser extrahiert und getrocknet.

**Herstellung der Folien:**

Aus dem nach oben beschriebenem Verfahren hergestellten Polyamid wird eine 50 Mikrometer dicke Flachfolie nach dem Chill roll Verfahren hergestellt (Massetemperatur: 260°C, Gießwalzentemperatur: 90°C).

**Bestimmung der Partikelgröße des Füllstoffes in den untersuchten Folien:**

Die Bestimmung der Partikelgröße des Fluorglimmers in der Polyamidfolie erfolgt durch visuelle Beurteilung transmissionselektronenmikroskopischer Aufnahmen. Falls die Partikel stark anisotrop sind, ist unter der Partikelgröße die Abmessung der kleinsten auftretenden Achse zu verstehen (z. B. ist im Falle plättchenförmiger Partikel unter der Partikelgröße die Plättchendicke zu verstehen).

| Beispiel | Füllstoffart | Füllstoffmenge in g (Gew.-%) | mittlere Partikelgröße in nm | relative Lösungsviskosität des extrahierten Polymerisats (1 %, m-Kresol, 25°C) |
|---|---|---|---|---|
| 1 (Vergleich) | kein Füllstoff | - | - | 4,3 |
| 2 | Fluorglimmer | 75 (1 Gew.-%) | 9 | 4,3 |
| 3 | Fluorglimmer | 150 (2 Gew.-%) | 9 | 4,3 |

| Beispiel | Sauerstoffpermeation in (cm$^3$ x 25,4 $\mu$m) / (m$^2$ x 24 h x bar) bei einer relativen Meßgasfeuchte von: | | | Zug modul nach DIN 53 457 in MPa | Reißdehnung nach 53455 in % | Glanz nach DIN 67530 in Skalenteilen | Trübung nach ASTM D 1003-61 in % |
|---|---|---|---|---|---|---|---|
| | 25 % | 50 % | 75 % | | | | |
| 1 (Vergleich) | 40 | 46 | 69 | 948 | 357 | 97 | 6,4 |
| 2 | 27 | 30 | 46 | 1370 | 200 | 67 | 2,5 |
| 3 | 20 | 23 | 33 | 1183 | 318 | 35 | 6,3 |

**Patentansprüche**

1. Ein- oder mehrschichtige Folien oder Hohlkörper, enthaltend mindestens eine Polyamidschicht, wobei die Polyamidschicht feindispersen Fluorglimmer enthält.

2. Folien oder Hohlkörper gemäß Anspruch 1, wobei die Polyamidschicht 0,1 bis 10 Gew.-% Fluorglimmer, bezogen auf die Gesamtmasse, enthält.

3. Folien oder Hohlkörper gemäß Anspruch 1, wobei die mittlere Partikelgröße des Fluorglimmer weniger als 1 Mikrometer beträgt.

4. Folien oder Hohlkörper gemäß Anspruch 1, wobei die mittlere Partikelgröße des Fluorglimmers Kleiner als 100 nm ist.

5. Folien oder Hohlkörper gemäß Anspruch 4, wobei die mittlere Partikelgröße des Fluorglimmers kleiner als 50 nm ist.

6. Folien oder Hohlkörper gemäß Anspruch 1, wobei die Fluorglimmer der Formel (I)

$$x(MF) \cdot y(aMgF_2 \cdot bMgO) \cdot zSiO_2$$

wobei

M    für ein Alkalimetall steht und die Koeffizienten x, y, z, a und b die folgende Bedeutung haben:

$0,1 \leq x \leq 2; 2 \leq y \leq 3,5; 3 \leq z \leq 4; 0 \leq a \leq 1; 0 \leq b \leq 1$ und $a + b = 1$,

eingesetzt wird.

7. Folien oder Hohlkörper gemäß Anspruch 2, wobei die Polyamidschicht 0,5 bis 5 Gew.-% Fluorglimmer enthält.

8. Folien oder Hohlkörper gemäß Anspruch 7, wobei die Polyamidschicht 1 bis 3 Gew.-Teile Fluorglimmer enthält.

9. Verwendung von mit feindispersen Fluorglimmer gefülltem Polyamid gemäß Anspruch 1, zur Herstellung von ein- oder mehrschichtigen Folien oder Hohlkörpern.

10. Verpackungen erhältlich aus einer Folie oder einem Hohlkörper gemäß Anspruch 1 und 9.

| Europäisches Patentamt | **EUROPÄISCHER RECHERCHENBERICHT** | Nummer der Anmeldung EP 97 10 7911 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,Y | DATABASE WPI Section Ch, Week 9629 Derwent Publications Ltd., London, GB; Class A23, AN 96-283601 XP002037688 & JP 08 120 099 A (UNITIKA LTD) , 14.Mai 1996 * Zusammenfassung * --- | 1-10 | C08K3/34 C08J5/18 |
| D,Y | EP 0 358 415 A (UBE INDUSTRIES ;TOYOTA MOTOR CO LTD (JP); TOYODA CHUO KENKYUSHO KK) 14.März 1990 * Beispiel 1 * * Seite 9 - Seite 11 * * Ansprüche 1-3 * --- | 1-10 | |
| D,A | EP 0 605 005 A (UNITIKA LTD) 6.Juli 1994 * Anspruch 1 * ----- | 1-10 | |
| | | | **RECHERCHIERTE SACHGEBIETE (Int.Cl.6)** C08K C08J |

Der vorliegende Recherchenbericht wurde für alle Patentansprüche erstellt

| Recherchenort | Abschlußdatum der Recherche | Prüfer |
|---|---|---|
| DEN HAAG | 13.August 1997 | Siemens, T |